Europäisches Patentamt

European Patent Office

Office européen des brevets

(19)

(11) Veröffentlichungsnummer: **0 085 781**
**B1**

(12) **EUROPÄISCHE PATENTSCHRIFT**

(45) Veröffentlichungstag der Patentschrift:
24.07.85

(51) Int. Cl.⁴: **A 61 C 13/26**

(21) Anmeldenummer: 82111890.8

(22) Anmeldetag: 21.12.82

(54) Zahngeschiebeverbindung, sowie Verfahren und Vorrichtung zur Herstellung einer Geschiebeverbindung.

(30) Priorität: 19.01.82 DE 3201391

(43) Veröffentlichungstag der Anmeldung:
17.08.83 Patentblatt 83/33

(45) Bekanntmachung des Hinweises auf die Patenterteilung:
24.07.85 Patentblatt 85/30

(84) Benannte Vertragsstaaten:
AT BE CH FR GB IT LI LU NL SE

(56) Entgegenhaltungen:
DE - A - 2 443 584
US - A - 3 344 842
US - A - 4 196 516

(73) Patentinhaber: Pedrazzini, Francesco, Cramer Klett Strasse 16b, D-8014 Neubiberg (DE)

(72) Erfinder: Pedrazzini, Francesco, Cramer Klett Strasse 16b, D-8014 Neubiberg (DE)

(74) Vertreter: Flach, Dieter Rolf Paul, Dipl.-Phys. et al, Patentanwälte Andrae/Flach/Haug/Kneissl Prinzregentenstrasse 24, D-8200 Rosenheim (DE)

## Beschreibung

Die Erfindung betrifft ein Verfahren zur Herstellung einer Geschiebeverbindung zwischen einem Zahnprothesenkörper bzw. einer Zahnbrücke und einem Verankerungszahn bzw. einer Krone nach dem Oberbegriff des Anspruches 1 sowie eine Vorrichtung zur Herstellung einer Geschiebeverbindung und eine Geschiebeverbindung nach dem Oberbegriff des Anspruches 8 bzw. 13.

Geschiebe haben in der Zahnmedizin eine grosse Bedeutung, insbesondere bei einer Brückenteilung, einem Modellguss und vor allem bei sämtlichen abnehmbaren Zahnprothesen. Die Geschiebematrize verbindet dabei über die Geschiebepatrize einen Prothesenkörper mechanisch mit einer Krone oder einem Verankerungszahn.

Geschiebepassungen sind im wesentlichen ein konzentrisches Doppelankersystem.

Es besteht dabei immer aus Passteilen, nämlich einer Matrize mit einer Hohl- bzw. Negativform und einer Patrize als Positivform. Im allgemeinen wird dabei die Matrize an einer Krone bzw. an einem Verankerungszahn vorgesehen, während die Patrize am Prothesenteil verankert wird.

Dabei lassen sich prinzipiell zwei Grundtypen der Verbindung beispielsweise zwischen einem Zahnprothesenkörper und einem Verankerungszahn unterscheiden.

Zum einen ist es möglich, dass eine Patrize an einem Zahnprothesenkörper angegossen wird. Hierbei treten vor allem aber zahlreiche Probleme hinsichtlich der Masshaltigkeit der gesamten Anordung auf, weshalb zum einen das Geschiebe oft nur schwer ineinander gefügt werden kann bzw. die Geschiebeteile nur schwer voneinander zu lösen sind.

Alternativ dazu besteht die Möglichkeit, dass an einer Krone bzw. einem Verankerungszahn eine entsprechende Ausnehmung zur Aufnahme eines Matrizenkörpers geschaffen wird. Der Matrizenkörper wird dabei im Verankerungszahn fest eingebettet. Ferner wird auf dem Prothesenteil, das mit dem Verankerungszahn verbunden werden soll, ein Gehäuse zur Befestigung eines Patrizenkörpers aufgelötet. Dazu weist der Patrizenkörper einen Verankerungsteil auf, der in das betreffende Gehäuse einführbar und dann befestigbar ist, wie dies aus der US-A Nr. 4196516 als vorbekannt entnehmbar ist.

Dabei wird das Gehäuse an einer sogenannten Skelettprothese angelötet, wobei über diese Skelettprothese und das Gehäuse ein entsprechender fleischfarbener Kunststoffüberzug zur Abschirmung gegeben wird.

Bei der Verankerung einer Zahnprothese beispielsweise für die unteren Backenzähne an einer vorderen Zahnkrone werden also zur Befestigung der entsprechenden Matrizen- und Gehäusekörper zur Aufnahme der Patrizen vier Lötvorgänge benötigt, was äusserst aufwendig ist, und was darüber hinaus vor allem Ausrichtungsprobleme schafft, da die entsprechende Anlötung der Gehäuseteile und der Matrizenkörper hinreichend exakt vorgenommen werden muss, um die Patrizen in die Matrizenkörper leicht und ohne Verkantungen einführen zu können.

Darüber hinaus ergibt sich immer noch ein weiterer Nachteil insbesondere bei Anwendung der sogenannten Aufbrenntechnik. Hierbei werden insbesondere für die vorderen Zahnpartien auf eine Edelmetallegierung naturzähnliche, aus Keramik bestehende Zahnfrontteile bei hohen Temperaturen bis über 1000° C aufgebrannt. Hierbei hat sich aber vor allem gezeigt, dass beim Aufbrennen der Keramik die entsprechenden Lötstellen auslaufen. Damit wächst aber die Gefahr, dass die entsprechenden Matrizenkörper bei stärkeren Beanspruchungen abbrechen können.

Darüber hinaus ist es auch bekannt, auf einer Skelettprothese ein Befestigungsteil anzubringen, bzw. anzugiessen, in dem ein Gehäuse für das Verankerungsteil einer Patrize festschraubbar ist.

Bei diesem bekannten Verfahren wird zwar auch der Vorteil realisiert, dass die Patrize, die vorzugsweise aus V2A-Stahl besteht, auswechselbar ist. Dennoch erfordert das Festschrauben des Gehäuses an ein Befestigungsteil einen zusätzlichen Arbeitsvorgang, wobei zudem noch durch diese Anordnung eine feste und stabile Verbindung nur bedingt ermöglicht wird.

Aufgabe der Erfindung ist es, ein Verfahren zur Herstellung einer Geschiebeverbindung zwischen einem Zahnprothesenkörper bzw. einer Zahnbrücke und einem Verankerungszahn bzw. einer Krone mit einer auswechselbaren Patrize, die in einem Gehäuse befestigbar ist, sowie eine Vorrichtung zur Herstellung einer Geschiebeverbindung und eine Geschiebeverbindung so zu verbessern, dass die Passgenauigkeit erhöht wird. Die Aufgabe wird erfindungsgemäss bezüglich des Verfahrens entsprechend den im kennzeichnenden Teil des Anspruches 1, bezüglich der Vorrichtung entsprechend den im kennzeichnenden Teil des Anspruches 8 und bezüglich der Geschiebeverbindung entsprechend den im kennzeichnenden Teil des Anspruches 13 angegebenen Merkmalen gelöst. Vorteilhafte Ausgestaltungen der Erfindung im Sinne der Aufgabenstellung sind in den Unteransprüchen angegeben.

Durch die Erfindung wird erstmals in optimaler Weise eine stabile Geschiebeverbindung mit einem Zahnprothesenkörper ermöglicht, die trotz einer einfachen Bearbeitung deutlich verbesserte Werte hinsichtlich ihrer Passgenauigkeit ermöglicht.

Vor allem aber auch bei der Anwendung der Aufbrenntechnik von Keramikzahnbestandteilen auf Gold oder einer Platinlegierung werden die Vorteile der Erfindung deutlich, da das Auslaufen einer Lötstelle vermieden wird. Durch die Erfindung wird somit auch insbesondere beim Zusammenfügen der Patrizen und der Matrizenform an einem Verankerungszahn oder einer Krone das Verkanten von beiden Teilen herabgesetzt, was immer wieder zu Problemen führte. Im wesentlichen wird dies dadurch ermöglicht, dass ein gemeinsames Wachsmodell von dem Gehäuse und dem Zahnprothesenkörper bzw. der Zahnbrücke mittels eines vorgefertigten, dem Verankerungsteil der Patrize entsprechenden Gehäuseformers erstellt wird.

In einer vorteilhaften Ausgestaltung der Erfindung nach Anspruch 2 erfolgt dabei die Modellation des Wachsgehäuses mittels einer den Gehäuseformer aufweisenden und der Patrize mit dem Verankerungsteil entsprechenden Sekundärpatrize, wobei in einer Weiterbildung nach Anspruch 3 dazu die Sekundärpatrize in den Matrizenhohlraum in dem Verankerungszahn bzw. der Krone eingeschoben wird.

Als besonders vorteilhaft erweist sich nach Anspruch 4, dass die Sekundärpatrize aus dem gleichen Material wie ein Matrizenformer besteht, der zur Ausbildung eines entsprechenden Hohlraumes in dem zu modellierenden Verankerungszahn bzw. der zu modellierenden Krone verwendet wird.

Dadurch wird die Pass- und Massgenauigkeit deutlich erhöht. Denn beim Herstellen beispielsweise eines Verankerungszahnes wie auch des Gehäuses wird zunächst die modellierte Wachsform in eine die Form eines Hohlzylinders aufweisende Muffel gegeben und entsprechend eingebettet. Da beim Erhitzen der gesamten Anordnung durch entsprechend vorgesehene Gusskanäle das Wachs ausfliesst, kann in dem in der Einbettmasse zurückbleibenden Hohlraum eine entsprechende Legierung zur Fertigung des Zahnprothesenteils bzw. des Verankerungszahnes eingegossen werden. Da das gleiche hitzebeständige Material für den Matrizenformer wie für die Sekundärpatrize zur Bildung des Gehäuses verwendet wird, lassen sich beim Aufheizen in der Muffel für beide Teile auch hinsichtlich der Massgenauigkeit die gleichen Ergebnisse erzielen, wodurch die Passgenauigkeit der später einzusetzenden und aus Edelmetall oder vorzugsweise aus V2A-Stahl bestehenden Patrize mit ihrem Verankerungsteil sowohl in der entsprechenden Hohlform des Verankerungszahnes wie im Gehäuse deutlich erhöht wird.

In einer bevorzugten Ausführungsform nach Anspruch 5 besteht dabei die verwandte Sekundärpatrize zur Modellation des Gehäuses aus Keramik.

Als vorteilhaft ergibt sich auch nach Anspruch 6, dass das Wachsgehäuse den Gehäuseformer und damit letztlich das Verankerungsteil der Patrize allseitig bis auf die der Sekundärpatrize zugewandt liegenden Seite voll umschliesst, so dass später ein optimaler und fester Halt gewährleistet ist.

In den Ansprüchen 8 bis 11 ist eine bevorzugte Vorrichtung zur Herstellung einer Geschiebeverbindung in Form einer Sekundärpatrize angegeben, deren Form der Patrize mit dem Verankerungsteil entspricht.

In der erfindungsgemässen Geschiebeverbindung nach Anspruch 13 ist das mit dem Zahnprothesenkörper bzw. der Zahnbrücke gemeinsam einstückig hergestellte Gehäuse bis auf eine Einführungsöffnung für das Verankerungsteil der Patrize allseitig umschlossen und garantiert dadurch höchste Stabilität und Passgenauigkeit.

Weitere Vorteile, Einzelheiten und Merkmale der Erfindung ergeben sich nachfolgend aus der anhand von Zeichnungen erfolgten Beschreibung der Erfindung. Dabei zeigen im einzelnen:

Fig. 1: einen Matrizenformer;

Fig. 2: das Modell einer Wachskrone mit dem eingearbeiteten Matrizenformer;

Fig. 3: eine Sekundärpatrize zur Modellation eines Gehäuses zur Aufnahme eines Verankerungsteiles einer Patrize;

Fig. 4: eine entsprechend dem Wachsmodell gegossene Vollgusskrone mit eingesetzter Sekundärpatrize zur Modellation des Gehäuses zur Aufnahme einer Patrize;

Fig. 5: die Vollgusskrone mit eingesetzter Patrize mit Verankerungsteil;

Fig. 6: ein U-förmiges Verschlussglied zur Verbindung des Verankerungsteiles der Patrize mit dem Gehäuse;

Fig. 7: die Vollgusskrone, die über die Patrize und das Gehäuse fest mit einer Prothese verbunden ist;

Fig. 8: eine andere Ausführungsform der Patrize mit entsprechendem Verankerungsteil;

Fig. 9a bis 9c: ein weiteres Ausführungsbeispiel mit einem leicht konisch zulaufenden Matrizenformer, einer dementsprechenden Patrize und einem Gehäuseformer aus Keramik;

Fig. 10a bis 10j: eine Darstellung der unterschiedlichen aufeinanderfolgenden Arbeitsschritte.

Im folgenden wird die Herstellung und Ausbildung einer Verbindung über eine Patrize und einem Gehäuse zwischen einer Wachskrone und einer Zahnprothese erläutert.

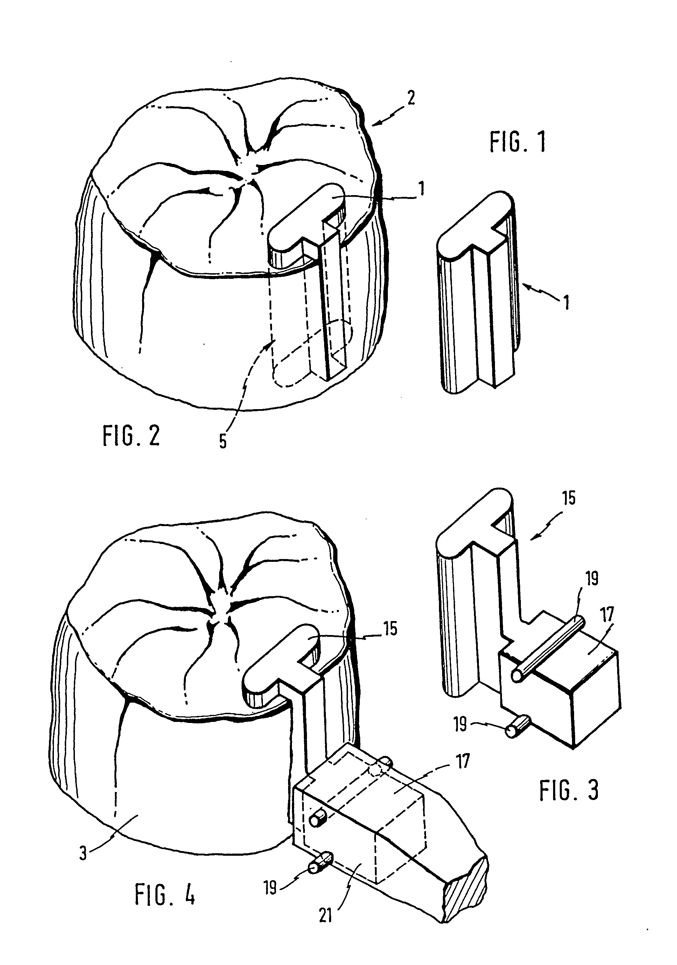

In Fig. 1 ist eine Patrize mit 1 bezeichnet, die im folgenden als Matrizenformer benannt wird. Der gezeigte Matrizenformer weist im wesentlichen einen ovalen Querschnitt auf. Dieser Matrizenformer 1 wird in eine entsprechende Wachskrone 2 einmodelliert, um einen entsprechenden Hohlraum zur Aufnahme einer Patrize zu bilden. Der Matrizenformer besteht dabei aus hitzebeständiger Keramik und wird während des Modellierens mittels eines Parallelhalters gehalten und ausgerichtet.

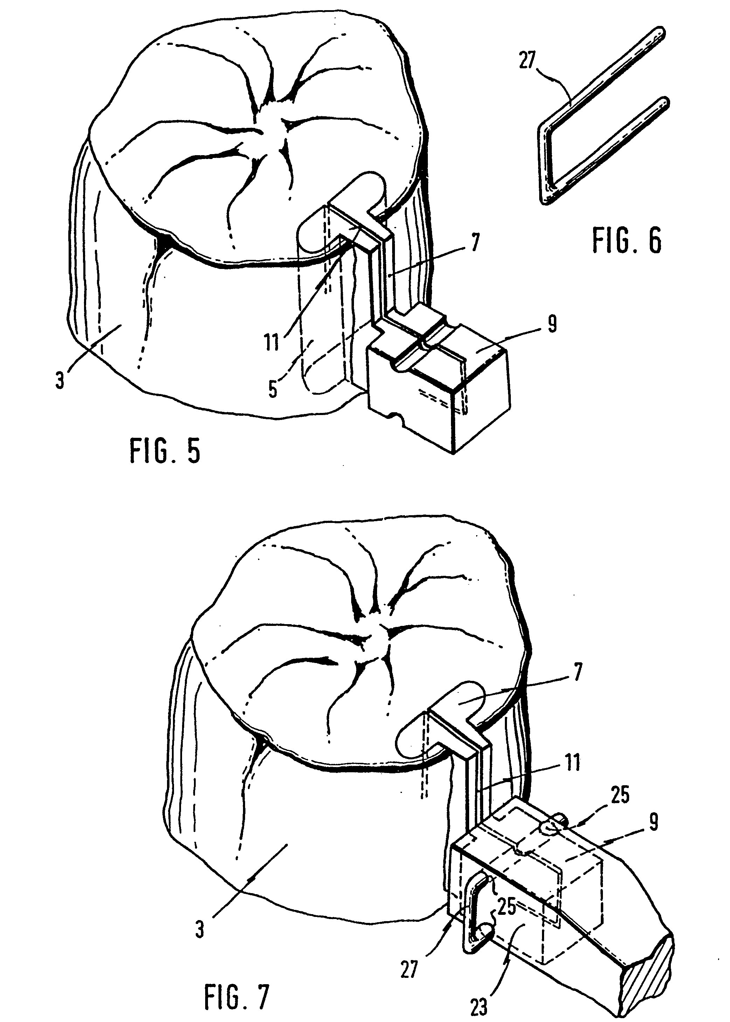

Die so modellierte Wachskrone wird mit dem Matrizenformer 1 in eine die Form eines Hohzylinders aufweisende Muffel gegeben, wie nicht näher gezeigt ist, wobei in bekannter Art und Weise das Wachsmodell der Krone über Gusskanäle, die ebenfalls aus Wachsdraht bestehen, mit einem an seinem oberen Ende eine Öffnung aufweisenden Gusskegel verbunden werden. Danach wird der gesamte Innenraum der Muffel mit einer Einbettmasse aufgefüllt. Nach dem Erstarren der Einbettmasse wird die Muffel in einem Ofen auf beispielsweise 800° C erhitzt, wobei das Wachs schmilzt und über die Gusskanäle nach unten ausfliesst, wobei jedoch der aus hitzebeständiger Keramik bestehende Matrizenformer 1 an seiner Stelle in der Einbettmasse zurückbleibt. Somit bleibt nach dem Ausfliessen des Wachses in der Einbettmasse ein Hohlraum zurück, der der zu modellierenden Zahnkrone entspricht. Beispielsweise mittels des bekannten Schleudergussverfahrens wird dann durch die Gusskanäle eine Legierung oder auch Edelmetalle wie Gold in den durch das weggeströmte Wachs gebildeten Hohlraum gespritzt, wobei die so modellierte Zahnkrone gebildet wird. Der in der fertig ausgebildeten Vollgusskrone 3, deren Form der modellierten Wachskrone 2 entspricht, zurückgebliebene Matrizenformer 1 wird dann entweder mit einem Sandstrahlgebläse, auch kurz Sandstrahler genannt, ausgestrahlt oder aber mittels Säure ausgelöst. Zurück bleibt somit in der Vollgusskrone ein Matrizenhohlraum 5, wie er in Fig. 5 liniert eingezeichnet ist, wobei der Hohlraum 5 entsprechend dem Matrizenformer 1 ausgebildet ist.

Danach wird, wie insbesondere in Fig. 5 gezeigt ist, die Patrize 7 mit ihrem Verankerungsteil 9, auf den noch im folgenden eingegangen wird, in den Hohlraum 5 der Vollgusskrone 3 eingesetzt und ausgearbeitet, d. h. die Patrize 7 wird gekürzt, abgeschliffen und ihre Oberfläche entsprechend an die Kaufläche der Vollgusskrone 3 angepasst. Bei der Patrize 7 handelt es sich dabei um ein Präzisionsteil, das ganz genau an die als Hohlform ausgebildete Matrizenform angepasst werden muss. Dazu ist zusätzlich ein Aktivierungsschlitz 11 längs der Symmetrieachse der Patrize 7 vorgesehen, der im Verankerungsteil 9 endet. Aufgrund dieses langen Schnittes in der Patrize lässt sich diese ohne zu verkanten leicht aktivieren, wobei hierzu als Instrument in bekannter Art und Weise ein flexibler dünner Spachtel geeignet ist.

Nachdem die Pratize 7 so aufgrund der erfolgten Anpassung die endgültige Form angenommen hat, wird sie wieder aus dem Hohlraum 5 der Vollgusskrone 3 entfernt. Wie insbesondere aus Fig. 3 und Fig. 4 zu ersehen ist, wird nunmehr eine Sekundärpatrize 15 in den Hohlraum 5 der Vollgusskrone 3 eingefügt. Die Sekundärpatrize 15 besteht dabei ebenfalls aus hitzefester Keramik und weist eine dem Matrizenformer 1 entsprechende Form auf. Zusätzlich ist jedoch ein Gehäuseformer 17 vorgesehen, der dem Verankerungsteil 9 der endgültigen Patrize 7 entspricht. Zusätzlich sind noch rohrförmige Glieder 19 am Gehäuseformer 17 vorgesehen, auf deren Bedeutung noch später eingegangen wird. Wie sich dabei ferner aus Fig. 3 und 5 ergibt, ist das Verankerungsteil 9 der Patrize 7 im wesentlichen am unteren Ende der Patrize 7 quer zu dieser wegstehend vorgesehen. Das Verankerungsteil weist dabei einen polygonalen Querschnitt, im gezeigten Ausführungsbeispiel einen quadratischen bzw. rechteckförmigen Querschnitt auf. Die gleiche Form ist im wesentlichen bei der Sekundärpatrize 15 mit dem senkrecht dazu wegstehenden Gehäuseformer 17 gegeben.

Wie insbesondere aus Fig. 4 zu ersehen ist, wird um den Gehäuseformer 17 herum ein Wachsgehäuse 21 modelliert, um ein Gehäuse zur Aufnahme des Verankerungsteiles 9 der Patrize 7 zu bilden. Wie dabei nicht näher gezeigt ist, wird das Wachsgehäuse 21 gemeinsam mit einem Prothesenskelett aus Wachs modelliert. Dabei wird die Wachsmodellation so angebracht, dass sie den Gehäuseformer 17 allseitig bis auf die der Sekundärpatrize 15 zugewandt liegende Seite voll umschliesst und damit nachher einen optimalen stabilen und festen Sitz der Patrize 7 im Gehäuse 23 ermöglicht.

Dieses Wachsmodell des Wachsgehäuses 21 mit der anmodellierten Prothese bzw. Brücke wird gemeinsam mit der Sekundärpatrize 15, wie oben bereits für die Wachskrone mit dem Matrizenformer 1 beschrieben, in eine Muffel gegeben, eingebettet und in einem Ofen erhitzt. Dabei fliesst das Wachs aus, wobei die aus hitzebeständigen Keramik bestehende Sekundärpatrize 15 in der Einbettmasse zurückbleibt. In den so gebildeten Hohlraum wird ebenfalls wieder eine Metallegierung gegossen, wobei eine einstückige Ausbildung der nicht näher gezeigten Prothese mit dem Gehäuse 23 entsteht. Die im Gehäuse 23 noch befindliche Sekundärpatrize 15 aus Keramik wird ebenfalls wieder durch ein Sandstrahlgebläse ausgeblasen oder durch Säure ausgelöst. Da auch die rohrförmigen Glieder 19 miteingebettet wurden, die eine grössere Breite als die Breite des Verankerungsteiles 9 aufweisen, und in dem ausgegossenen Gehäuse 23 mitenthalten sind, werden diese ebenfalls durch das Sandgebläse bzw. durch die Säure ausgeblasen bzw. ausgelöst. Somit bleiben jeweils auf beiden Seiten des Gehäuses zwei Öffnungen 25 in diesem zurück.

In das so gewonnene passgenaue Gehäuse 23, das fest mit der nicht näher gezeigten Prothese einstückig ausgebildet ist, wird dann die ausgearbeitete Patrize 7 mit dem Verankerungsteil 9 eingeschoben. Mittels eines U-förmigen Bügels 27 kann dann die Patrize 7 an dem Gehäuse 23 fest verankert werden, indem der U-förmige Bügel 27 durch die Öffnungen 25 in das Gehäuse 23 eingeschoben wird. Die Anordnung ist dabei dergestalt, dass jeweils eine im Querschnitt halbkreisförmige Ausnehmung auf der Ober- und Unterseite des Verankerungsteiles 9 der Patrize 7 vorgesehen ist, und entsprechend einer ebenfalls halbkreisförmigen Ausnehmung auf der Innenseite des Gehäuses 23 liegt, die beim Ausgiessen des Gehäuses 23 durch die rohrförmigen Glieder 19 mit ihren über den quaderförmigen Gehäuseformer hinausstehenden Vorsprüngen gebildet wurden.

Die so sicher am Gehäuse und somit an der nicht näher gezeigten Prothese verankerte Patrize 7 wird so gemeinsam mit der Prothese in den matrizenförmigen Hohlraum 5 der Vollgusskrone 3 eingeführt, wodurch eine sichere Geschiebeverbindung hergestellt ist (Fig. 7).

Anstelle der gezeigten Verankerung der Patrize 7 in dem Gehäuse 23 mittels eines U-förmigen Bügels 27 sind natürlich andere Arretierungen und Verankerungen, beispielsweise mit einer Lamelle, mittels eines Stiftes, etc., möglich.

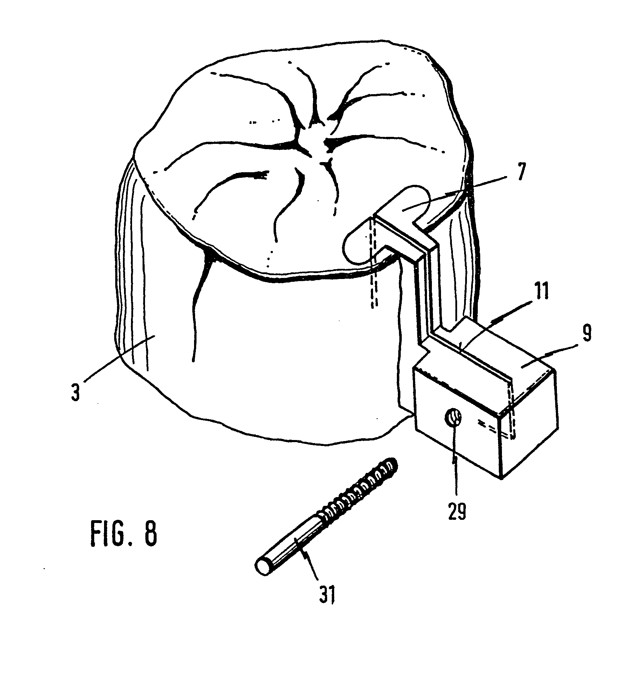

In Fig. 8 beispielsweise ist eine Patrize 7 mit einem Innengewinde 29 gezeigt. Wird beim Ausgiessen des Gehäuses 23 eine entsprechende Öffnung vorgesehen, so kann durch diese eine Schraube 31 in das Verankerungsteil 9 zur Befestigung der Patrize 7 an dem Gehäuse 23 eingeschraubt werden. Möglich ist aber auch, die Schraube nicht seitlich, sondern von unten her in das Gehäuse und das Verankerungsteil einzuschrauben.

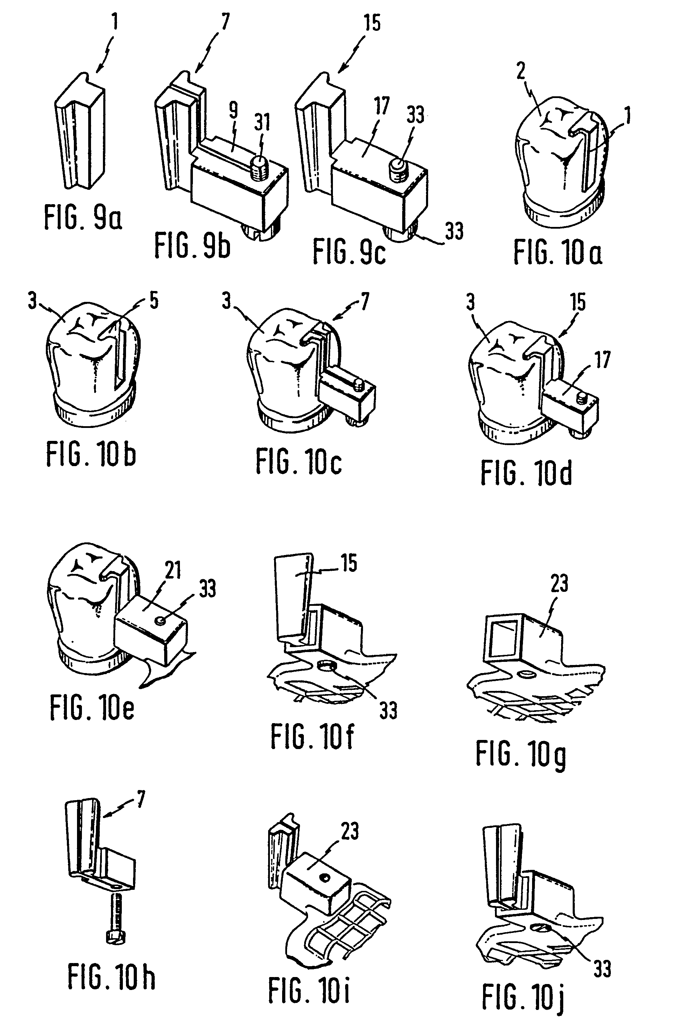

Im folgenden wird die Erfindung noch an einem zweiten Ausführungsbeispiel kurz zusammenfassend erläutert. In Fig. 9a ist dazu ein Matrizenformer 1 mit leicht nach unten sich konisch verjüngender Form gezeigt. Fig. 9b zeigt die Patrize 7 mit dem Verankerungsteil 9 mit einer von unten her eindrehbaren Schraube 31. In Fig. 9c ist mit entsprechender Form eine Sekundärpatrize 15 mit Gehäuseformer 17 gezeigt, die ebenfalls wie der Matrizenformer 1 aus Keramik besteht. Am Gehäuseformer 17 sind in entsprechender Form zur Schraube 31 Vorsprünge 33 vorgesehen, um bei der Wachsmodellation und bei der Erstellung des Gussmodelles entsprechende Ausnehmungen zu bilden, durch die dann die Schraube 31 zur Befestigung des Verankerungsteils im Gehäuse eingedreht werden kann.

Die einzelnen Arbeitsschritte werden im folgenden an den Fig. 10a bis 10j kurz erläutert:

Fig. 10a: Zunächst wird eine Wachskrone 2 mit einmodelliertem Matrizenformer 1 erstellt;

Fig. 10b: aus der Wachskrone wird in geschilderter Weise eine Vollgusskrone 3 mit enstprechendem Matrizenhohlraum 5 erstellt;

Fig. 10c: danach wird die Patrize 7 in den Matrizenhohlraum 5 gesteckt, anprobiert und ausgearbeitet;

Fig. 10d: danach wird die Sekundärpatrize 15 mit dem Gehäuseformer 17 in die Vollgusskrone 3 eingesetzt;

Fig. 10e: um den Gehäuseformer 17 herum wird eine Wachsmodellation, nämlich das Wachsgehäuse 21 aufgebracht, wobei die Vorsprünge 33 am Gehäuseformer 17, vor allem von unten her zum Einbringen für die Schraube 31 über die Wachsmodellation 21 überstehen;

Fig. 10f: zeigt die fertige Wachsmodellation in Frontansicht mit der Sekundärpatrize 15 und dem unteren Vorsprung 33;

Fig. 10g: wie in oben geschilderter Weise wird aus der Wachsmodellation ein endgültiges, die Zahnprothese und das Gehäuse 23 umfassendes Gussmodell erstellt;

Fig. 10h: zeigt die Patrize 7 mit herausgezogener Verriegelungsschraube 31 und

Fig. 10i: das an der Zahnprothese einstückig befestigte Gehäuse 23 mit eingesetzter Patrize 7 in unverschraubtem Zustand, wobei in

Fig. 10j: die Patrize 7 über die von unten her eingedrehte Schraube 31 am Gehäuse 23 fest verankert ist.

In dem gezeigten Ausführungsbeispiel wird von einer Patrize 7 mit ovalem Querschnitt ausgegangen. Die Erfindung lässt sich aber ebenso bei Geschieben mit einer anderen Geometrie verwenden, so beispielsweise bei einem Rechteckgeschiebe, bei dem der Zylinder durch eine Rechteckpassung ersetzt ist, bei einem T-Geschiebe bzw. Doppel-T-Geschiebe mit einer entsprechend so ausgebildeten Patrize, bei einem Trapezgeschiebe mit trapezförmiger Passung oder auch bei einem Dreieckgeschiebe, bei der die Fassung der Patrize dreieckförmig ausgebildet ist.

## Patentansprüche

1. Verfahren zur Herstellung einer Geschiebeverbindung zwischen einem Zahnprothesenkörper bzw. einer Zahnbrücke und einem Verankerungszahn bzw. einer Krone (3), wobei in dem Verankerungszahn bzw. der Krone (3) ein Matrizenhohlraum (5) zur Aufnahme einer Patrize (7) der Geschiebeverbindung vorgesehen ist und an dem Zahnprothesenkörper bzw. der Zahnbrücke ein Gehäuse (23) zur lösbaren Befestigung eines Verankerungsteiles (9) der Patrize (7) angebracht ist, dadurch gekennzeichnet, dass das Gehäuse (23) gemeinsam mit dem Zahnprothesenkörper bzw. der Zahnbrücke mittels eines vorgefertigten, dem Verankerungsteil (9) der Patrize (7) entsprechenden Gehäuseformers (17) unter Verwendung von Wachs modelliert und ein entsprechender einstükkiger, aus dem Gehäuse (23) und dem Zahnprothesenkörper bzw. der Zahnbrücke gebildeter Gusskörper hergestellt wird.

2. Verfahren nach Anspruch 1, dadurch gekennzeichnet, dass die Modellation des Wachsgehäuses (21) mittels einer den Gehäuseformer (17) aufweisenden und der Patrize (7) mit dem Verankerungsteil (9) entsprechenden Sekundärpatrize (15) erfolgt.

3. Verfahren nach Anspruch 1 oder 2, dadurch gekennzeichnet, dass zur Modellation des Wachsgehäuses (21) die Sekundärpatrize (15) in den Matrizenhohlraum (5) in dem Verankerungszahn bzw. der Krone (3) eingeschoben wird.

4. Verfahren nach Anspruch 1, 2 oder 3, dadurch gekennzeichnet, dass eine aus dem gleichen Material wie ein Matrizenformer (1) zur Bildung eines entsprechenden Matrizenhohlraumes (5) in dem zu modellierenden Verankerungszahn bzw. der zu modellierenden Krone (3) vorgefertigte Sekundärpatrize (15) verwendet wird.

5. Verfahren nach einem der Ansprüche 1 bis 4, dadurch gekennzeichnet, dass zur Modellation des Wachsgehäuses (21) eine aus Keramik bestehende Sekundärpatrize (15) verwendet wird.

6. Verfahren nach einem der Ansprüche 1 bis 5, dadurch gekennzeichnet, dass das Modellationswachs zur Erstellung des Wachsgehäuses (21) um den Gehäuseformer (17) der Sekundärpatrize (15) so aufgetragen wird, dass der Gehäuseformer (17) bis auf die der Sekundärpatrize (15) zugewandt liegenden Seite allseitig von der Wachsmodellation umschlossen ist.

7. Verfahren nach Anspruch 6, dadurch gekennzeichnet, dass die am Gehäuseformer (17) vorgesehenen Vorsprünge (19, 33) zur Bildung von Ausnehmungen im endgültigen Gussmodell zur Einbringung von Feststellmitteln (27, 31) über die Wachsmodellation hinausragend belassen werden.

8. Vorrichtung zur Herstellung einer Geschiebeverbindung nach einem der Ansprüche 1 bis 7, dadurch gekennzeichnet, dass die Vorrichtung durch eine Sekundärpatrize (15) mit einem Gehäuseformer (17) gebildet wird, deren Form der Patrize (7) mit dem Verankerungsteil (9) entspricht.

9. Vorrichtung nach Anspruch 8, dadurch gekennzeichnet, dass die Sekundärpatrize (15) aus dem gleichen Material wie der Matrizenformer (1) zur Bildung eines Matrizenhohlraumes (5) besteht.

10. Vorrichtung nach Anspruch 8 oder 9, dadurch gekennzeichnet, dass die Sekundärpatrize (15) aus Keramik besteht.

11. Vorrichtung nach einem der Ansprüche 8, 9 oder 10, dadurch gekennzeichnet, dass am Gehäuseformer (17) Vorsprünge (19, 33) zur Bildung von Ausnehmungen im Wachsmodell und im endgültigen Gusskörper zur Einbringung von Feststellmitteln (U-Bügel 27, Schraube 31) vorgesehen sind.

12. Vorrichtung nach einem der Ansprüche 8, 9, 10 oder 11, dadurch gekennzeichnet, dass der Gehäuseformer (17) im wesentlichen quer zur Patrizenlängsrichtung am unteren Ende in Einschubrichtung angeordnet ist und einen polygonalen Querschnitt, vorzugsweise in Rechteckform aufweist.

13. Geschiebeverbindung zwischen einem Zahnprothesenkörper bzw. einer Zahnbrücke und einem Verankerungszahn bzw. einer Krone (3), wobei in dem Verankerungszahn bzw. der Krone (3) ein Matrizenhohlraum (5) zur Aufnahme einer Patrize (7) der Geschiebeverbindung vorgesehen ist und an dem Zahnprothesenkörper bzw. der Zahnbrücke ein Gehäuse (23) zur lösbaren Befestigung eines Verankerungsteils (9) der Patrize (7) angeordnet ist, dadurch gekennzeichnet, dass das Gehäuse (23) gemeinsam mit dem Zahnprothesenkörper bzw. der Zahnbrücke einstückig ausgebildet und bis auf eine Einführöffnung für das Verankerungsteil (9) der Patrize (7) allseitig umschlossen ist.

14. Geschiebeverbindung nach Anspruch 13, dadurch gekennzeichnet, dass im Gehäuse (23) eine oder mehrere Öffnungen (25) zur Einbringung von Feststellmitteln (U-Bügel 27, Schraube 31) vorgesehen sind.


**Claims**

1. A method of producing a dental precision attachment between a removable dental prosthetic member or a dental bridge and an anchoring tooth or crown (3), using an anchoring cavity (5), in said anchoring tooth or said crown (3), to receive a male element (7) of the said precision attachment, and using a socket member (23), on the prosthetic member or the dental bridge, for detachably mounting on an anchoring part (9) of the male element (7), characterized in that an expendable pattern is made of the socket member (23) and the dental prosthetic member or the dental bridge by means of a prefabricated socket member former (17) corresponding to the anchoring part (9) of the male element (7) using expendable material and a corresponding single-piece casting is produced in the form of the socket member (23) and the dental prosthetic member or the dental bridge.

2. The method as claimed in Claim 1, characterized in that the production of the pattern in the form of the expendable socket member (21) is undertaken with the use of a secondary male element (15) having the socket member former (17) and corresponding to the male element (7) with the anchoring part (9).

3. The method as claimed in Claim 1 or Claim 2, characterized in that for producing the expendable pattern (21) of the socket member the secondary male element (15) is inserted into the anchoring cavity (5) in the anchoring tooth or the crown (3).

4. The method as claimed in Claim 1, Claim 2 or Claim 3, characterized by the use of a prefabricated secondary male element (15) made of the same material as a female element former (1) for the formation of a corresponding anchoring cavity (5) in the anchoring tooth or in the crown (3) of which the pattern is to be made.

5. The method as claimed in any one of Claims 1 to 4, characterized in that for making an expendable pattern of the socket member (21) a secondary male element (15) consisting of ceramic material is used.

6. The method as claimed in any one of Claims 1 to 5, characterized in that the material for producing an expendable pattern (21) of the socket member is applied to the socket member former (17) of the secondary male element (15) in such a way that the socket member former (17) is enclosed on all sides by the expendable pattern material apart from the side facing the secondary male element (15).

7. The method as claimed in Claim 6, characterized in that the projections (19 and 33) provided on the socket member former (17) are left sticking out through the expendable pattern to form recesses in the ultimate casting pattern for fixing means (27 and 31).

8. An apparatus for producing a dental precision attachment as claimed in any one of Claims 1 to 7, characterized in that the apparatus is formed by a secondary male element (15) with a socket member former (17), whose form corresponds to the male element (7) with the anchoring part (9).

9. The apparatus as claimed in Claim 8, characterized in that the secondary male element (15) is made of the same material as the female element former (1) for forming an anchoring cavity (5).

10. The apparatus as claimed in Claim 8 or 9, characterized in that the secondary male element (15) is made of ceramic material.

11. The apparatus as claimed in any one of Claim 8, 9 or 10, characterized in that projections (19 and 33) on the socket member former (17) for forming recesses in the expendable pattern and in the ultimate cast body for fixing means (u-like part 27 or screw 31).

12. The apparatus as claimed in any one of Claim 8, 9, 10 or 11, characterized in that the socket member former (17) is placed so as to be generally normal to the length direction of the male element at the lower end thereof in the direction of insertion and has a polygonal, or more especially rectangular cross-section.

13. A dental precision attachment between a dental prosthetic member or a dental bridge and an anchoring tooth or a crown (3), in which there is an anchoring cavity (5), in the anchoring tooth or the crown (3), of the precision attachment and on the dental prosthetic member or the dental bridge there is a socket member (23) for detachable mounting on an anchoring part (9) of the male element (7), characterized in that the socket member (23) is made integrally with the dental prosthetic member or the dental bridge and apart from an insertion hole for the anchoring part (9) of the male element (7) is covered on all sides.

14. The dental precision attachment as claimed in Claim 13, characterized by one or more openings (25) in the socket member (23) for fixing means (u-like part 27 or screw 31).

## Revendications

1. Méthode de réalisation d'un attachement à coulisse entre respectivement un corps de prothèse dentaire ou un bridge dentaire et une dent d'ancrage ou une couronne (3) selon laquelle il est prévu, dans la dent d'ancrage ou dans la couronne (3), une cavité de matrice (5) destinée à l'insertion d'une pièce mâle (7) de l'attachement à coulisse et selon laquelle il est installé, au corps de prothèse dentaire ou au bridge dentaire, un logement (23) destiné à la fixation amovible d'un élément d'ancrage (9) de la pièce mâle (7), caractérisée en ce que le logement (23) est moulé, conjointement avec le corps de prothèse dentaire ou le bridge dentaire, au moyen d'une forme à logement (17) préfabriquée correspondant à l'élément d'ancrage (9) de la pièce mâle (7), par application de cire et en ce qu'il est réalisé un corps moulé correspondant, en une seule pièce, formé à partir du logement (23) et du corps de prothèse dentaire ou du bridge dentaire.

2. Méthode suivant la revendication 1, caractérisée en ce que le moulage du logement en cire (21) est effectué au moyen d'une pièce mâle secondaire (15) représentant la forme à logement (17) et correspondant à la pièce mâle (7) avec son élément d'ancrage (9).

3. Méthode suivant l'une des revendications 1 ou 2, caractérisée en ce que la pièce mâle secondaire (15) est introduite dans la cavité de matrice (5) de la dent d'ancrage ou de la couronne (3), à des fins de moulage du logement en cire (21).

4. Méthode suivant l'une des revendications 1, 2 ou 3, caractérisée en ce qu'il est fait usage d'une pièce mâle secondaire (15) préfabriquée, de la même matière que la forme à matrice (1), en vue de former une cavité de matrice (5) correspondante dans la dent d'ancrage ou dans la couronne (3) à mouler.

5. Méthode suivant l'une des revendications 1 à 4, caractérisée en ce qu'il est utilisé une pièce mâle secondaire (15) en céramique afin de réaliser le moulage du logement en cire (21).

6. Méthode suivant l'une des revendications 1 à 5, caractérisée en ce que la cire de moulage, en vue de la réalisation du logement en cire (21), est appliquée autour de la forme à logement (17) de la pièce mâle secondaire (15), de manière que la forme à logement (17) soit entourée de tous les côtés par le moulage en cire, jusqu'à la face jouxtant la pièce mâle secondaire (15).

7. Méthode suivant la revendication 6, caractérisée en ce que les parties en saillie (19, 33), prévues sur la forme à logement (17), destinées à la formation d'orifices dans le moule définitif en vue d'y insérer un moyen de fixation (27, 31), sont laissées en saillie sur le moulage en cire.

8. Dispositif de réalisation d'un attachement à coulisse suivant l'une des revendications 1 à 7, caractérisé en ce que le dispositif est formé par une pièce mâle secondaire (15) comprenant une forme à logement (17), dont la configuration correspond à celle de la pièce mâle (7) comprenant l'élément d'ancrage (9).

9. Dispositif selon la revendication 8, caractérisé en ce que la pièce mâle secondaire (15) est de la même matière que la forme matrice (1) destinée à la formation de la cavité de matrice (5).

10. Dispositif suivant l'une des revendications 8 ou 9, caractérisé en ce que la pièce mâle secondaire (15) est en céramique.

11. Dispositif suivant l'une des revendications 8, 9 ou 10, caractérisé en ce qu'il prévu des parties en saillie (19, 33) sur la forme à logement (17), destinées à la formation d'orifices dans le moule en cire et dans le corps moulé définitif, en vue d'y insérer un moyen de fixation (maillon de fixation en U 27, vis 31).

12. Dispositif suivant l'une des revendications 8, 9, 10 ou 11, caractérisé en ce que la forme à logement (17) est disposée dans le sens d'emboîtement, essentiellement de manière transversale par rapport à l'axe longitudinal de la pièce mâle, à l'extrémité inférieure de celle-ci et présente une section transversale polygonale, de préférence de forme rectangulaire.

13. Attachement à coulisse entre respectivement un corps de prothèse dentaire ou un bridge dentaire et une dent d'ancrage ou une couronne (3) selon lequel il est prévu, dans la dent d'ancrage ou dans la couronne (3), une cavité de matrice (5) destinée à l'insertion d'une pièce mâle (7) de l'attachement à coulisse et selon lequel il est installé, au corps de prothèse dentaire ou au bridge dentaire, un logement (23) destiné à la fixation amovible d'un élément d'ancrage (9) de la pièce mâle (7), caractérisé en ce que le logement (23) est formé d'une seule pièce solidaire du corps de prothèse dentaire ou du bridge dentaire, et entouré de tous les côtés jusqu'à un orifice d'introduction destiné à recevoir l'élément d'ancrage (9) de la pièce mâle (7).

14. Attachement à coulisse suivant la revendication 13, caractérisé en ce qu'il est prévu dans le logement (23) un ou plusieurs orifices (25) destinés à l'introduction d'un moyen de fixation (maillon de fixation en U 27, vis 31).

FIG. 1

FIG. 2

5

FIG. 3

15

19

17

19

FIG. 4

3

15

17

19

21

FIG. 5

FIG. 6

FIG. 7

FIG. 8

FIG. 9a

FIG. 9b

FIG. 9c

FIG. 10a

FIG. 10b

FIG. 10c

FIG. 10d

FIG. 10e

FIG. 10f

FIG. 10g

FIG. 10h

FIG. 10i

FIG. 10j